# EUROPÄISCHE PATENTSCHRIFT

(11) **EP 0 428 948 B1**
(45) Veröffentlichungstag und Bekanntmachung des Hinweises auf die Patenterteilung: **21.09.1994**
(21) Anmeldenummer: 90121483.3
(22) Anmeldetag: 09.11.1990
(51) Int. Cl.: F24F 12/00, F24F 11/00

(54) **Verfahren zur Energierückgewinnung bei Belüftungsanlagen**
Process for energy recovery in ventilation
Procédé pour la récupération d'énergie dans des installations d'aération

(30) Priorität: 21.11.1989 DE 3938542
(43) Veröffentlichungstag der Anmeldung: 29.05.1991
(73) Patentinhaber: Menerga Apparatebau GmbH, D-45473 Mülheim (DE)
(72) Erfinder: Doerk, Horst, D-4300 Essen 18 (DE)
(74) Vertreter: COHAUSZ HASE DAWIDOWICZ & PARTNER

(56) Entgegenhaltungen:
- DE-A- 2 903 925
- DE-A- 3 613 942
- FR-A- 2 258 600
- FR-A- 2 481 423

## Beschreibung

Die Erfindung betrifft ein Verfahren zum Rückgewinnen von Energie aus der Luftströmung zwischen der Innenraumluft und der Außenluft mit Ventilatoren, die die Luft durch Wärmespeicher in zueinander entgegengesetzte Strömungsrichtungen drücken, wobei in zwei voneinander getrennten Kanälen je ein Wärmespeicher und ein Ventilator in entgegengesetzte Richtungen arbeiten, und daß in regelmäßigen Zeitabständen die Drehrichtungen beider Ventilatoren gleichzeitig wechseln.

In der FR-A-2 481 423 ist ein Verfahren zum Rückgewinnen von Energie aus der Luftströmung zwischen der Innenraumluft und der Außenluft mit Ventilatoren beschrieben, die die Luft durch Wärmespeicher in zueinander entgegengesetzte Strömungsrichtungen drücken, wobei in zwei voneinander getrennten Kanälen je ein Wärmespeicher und ein Ventilator in entgegengesetzte Richtungen arbeiten. Die Drehrichtungen der Ventilatoren wechseln gleichzeitig in regelmäßigen Abständen.
Eine hohe Energierückgewinnung wird bei diesem Verfahren dann erzielt, wenn die Zeitspannen, in denen die Ventilatoren in einer Richtung fördern, gleich sind den Zeitspannen, in denen die Ventilatoren in der entgegengesetzten Richtung fördern, wobei verhältnismäßig kurze Zeitspannen sich als optimal erwiesen haben.

Häufig zeigt es sich aber, daß insbesondere außerhalb der Winterzeit das Innere eines Gebäudes sich zu sehr erwärmt hat und damit Wärme nach außen geführt werden mußte, so daß es darauf ankam, den Wärmerückgewinnungsgrad der Anlage zu verringern. Dies kann dadurch geschehen, daß beide Zeitspannen für das Fördern von Luft in einer als auch in der anderen Richtung verlängert werden. Die Länge der Zeitspannen bleibt dabei gleich und der Wirkungsgrad der Anlage verringert sich soweit, daß aufgrund der geringeren Wärmerückgewinnung die Temperatur im Gebäude abgesenkt werden kann. Dies führt aber auch dazu, daß innerhalb der Anlage und insbesondere innerhalb der Wärmespeicher hohe Temperaturdifferenzen auftreten, die nicht nur schädlich für die Anlage sind, sondern sich auch negativ bei der Belüftung der Räume auswirken.

Aufgabe der Erfindung ist es, ein Verfahren der eingangs genannten Art zu schaffen, durch das es ermöglicht wird, den Grad der Wärmerückgewinnung zu verringern, ohne das hohe Temperaturdifferenzen in der Anlage und/oder Gebäude auftreten.

Die Aufgabe wird erfindungsgemäß dadurch gelöst, daß die Zeitspannen, in denen die Ventilatoren in einer Richtung fördern, ungleich sind von den Zeitspannen, in denen die Ventilatoren in die entgegengesetzte Richtung fördern.

Durch eine solche unterschiedliche Steuerung der Zeitspannen gelingt es, gewünschte Temperaturen innerhalb eines Gebäudes zu erhalten, insbesondere hohe Temperaturen im Gebäude abzubauen und den Wärmerückgewinnungsgrad optimal zu steuern, ohne hohe Temperaturdifferenzen bzw. hohe Temperaturwechsel im Gebäude und in der Anlage zu haben. Dies wird mit einfachsten Mitteln ohne zusätzliche technische Vorrichtungen und Konstruktionen allein aufgrund der Steuerung der Anlage erreicht.

Besonders vorteilhaft ist es hierbei, wenn die Zeitspannen der einen Richtung 50% bis 4-fach größer sind als die Zeitspannen der entgegengesetzten Richtung. Auch kann damit die Länge der Zeitspannen entsprechend der Raumtemperarur geregelt werden.

Besonders vorteilhaft es hierbei, wenn zur Regelung der Raumtemperatur die Länge der Zeitspanne, in denen die Ventilatoren in einer Richtung fördern, abnimmt und die Länge der Zeitspanne, in denen die Ventilatoren in der entgegengesetzten Richtung fördern, zunimmt. Auch sollten zwei aufeinander folgende Zeitspannen in ihrer Gesamtlänge (Intervall 3) stets gleich groß wie zwei darauffolgende Zeitspannen sein.

Von Vorteil ist es, wenn das Verfahren in zwei nebeneinander parallelen Kanälen durchgeführt wird.

Hierbei können die Kanäle außenseitig Filter aufweisen. Auch ist es von Vorteil, wenn beide Ventilatoren elektrisch geregelt werden.

Ein Ausführungsbeispiel der Erfindung wird im folgendem näher beschrieben. Es zeigen:
- Figur 1: ein Zeitdiagramm einer Anlage mit zwei Kanälen, die in entgegengesetzten Richtungen fördern mit gleichen Zeitspannen
- Figur 2: eine Steuerung ähnlich Figur 1 mit aber längeren Zeitspannen,
- Figur 3: eine erfindungsgemäße Steuerung mit ungleich langen Zeitspannen und
- Figur 4: mit abwechselnd wachsenden und abnehmenden Zeitspannen, wobei das Gesamtintervall zweier Zeitspannen gleich groß bleibt.

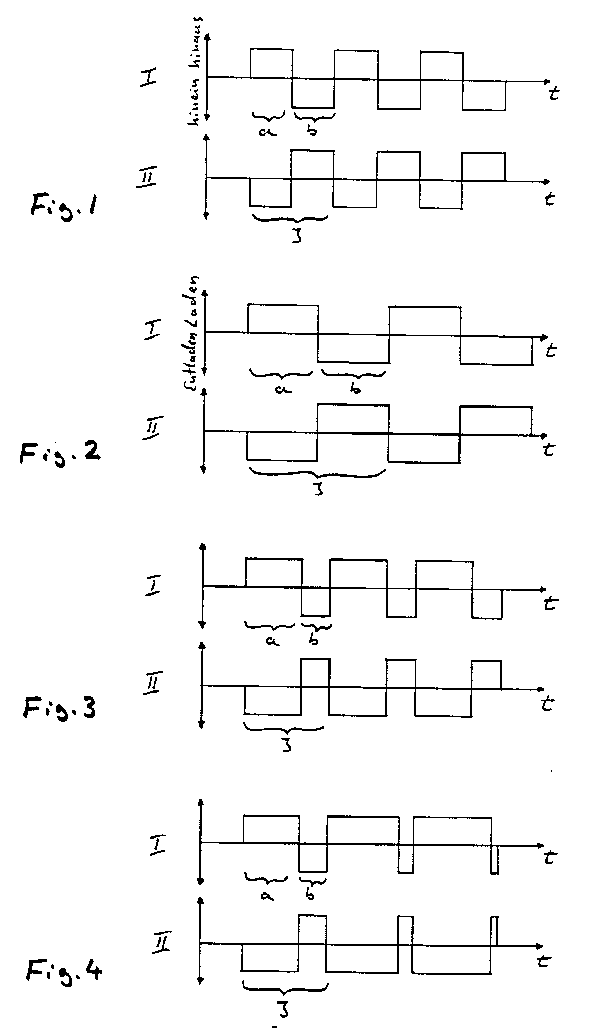

In Figur 1 sind die Zeitspannen zweier nebeneinanderliegender Kanäle I, II dargestellt. Wenn die Ventilatoren Luft aus dem Gebäude hinausfördern, so ist dies auf der Oberseite der waagerechten Zeitachse aufgetragen, und wenn ein Ventilator in das Gebäude hineinfördert, so ist dies auf der Unterseite aufgetragen. Damit wird aus Figur 1 ersichtlich, daß bei diesem bisher gehandhabten Verfahren der Ventilator I des Kanals I über die Zeitspanne a nach außen fördert und über dieselbe Zeitspanne der Ventilator II des Kanals II nach innen fördert und daß zu einem gleichen Zeitpunkt beide Ventilatoren I, II die Drehrichtung wechseln und dann über eine gleich lange Zeitspanne b fördern, bis wieder der nächste Wechsel erfolgt. Die Zeitspannen a und b sind hierbei stets gleich groß.

Um eine geringere Wärmerückgewinnung zu erhalten, um z.B. ein Gebäude zu kühlen, werden im Verfahren nach Figur 2 die Zeitspannen a und b länger gewählt, wobei sie aber weiterhin gleich groß sind.

Im Verfahren nach Figur 3 sind die Zeitspannen a und b zueinander unterschiedlich groß, wobei aber jede zweite Zeitspanne a bzw. b zueinander gleich groß sind.

Dies führt dazu, daß während der ersten längeren Zeitspanne a der Ventilator I des Kanals I länger aus dem Gebäude herausfördert und über dieselbe Zeitspanne a der Ventilator II länger in das Gebäude fördert und daß bei der darauffolgenden Zeitspanne b der Ventilator I kürzer hineinfördert und der Ventilator II kürzer hinausfördert.

Das Verfahren nach Figur 4 unterscheidet sich von dem nach Figur 3 dadurch, daß über die Zeit t die Zeitspanne a anwächst und währenddessen die Zeitspanne b abnimmt. Dieses Anwachsen und Abnehmen kann bei beiden Zeitspannen a und b gleich groß sein, so daß das gesamte Intervall I, das sich aus a plus b zusammensetzt, stets gleich groß bleibt.

Im folgenden wird eine Vorrichtung zum Durchführen des Verfahrens beschrieben:

Die Vorrichtung weist ein quaderförmiges Gehäuse größerer Länge als Breite oder Höhe auf. In Längsrichtung- ist das Gehäuse durch eine mittige, senkrechte Trennwand in zwei parallel nebeneinander liegende senkrechte Kanäle unterteilt, die in einem etwa mittleren Bereich Wärmespeicher aufweisen, die den Querschnitt der Kanäle vollständig äusfüllen und sich etwa über ein Drittel bis Hälfte der Länge der Kanäle erstrecken. Diese Wärmespeicher werden von den beiden entgegengesetzt gerichteten Luftströmen durchströmt, wobei die beiden Wärmespeicher durch die Wand voneinander getrennt sind, die die Kanäle trennt. Auf einer Seite jedes Wärmespeichers ist jeweils ein Ventilator befestigt. Diese beiden Ventilatoren fördern Luft stets in den zueinander entgegengesetzten Richtungen, wobei beide Ventilatoren in regelmäßigen Abständen gleichzeitig die Drehrichtung ändern und diese Arbeitsweise in kurzen Abständen wechseln.
So kann beispielsweise ein Ventilator bzw. Lüfter so fördern, daß Innenluft in Richtung durch den Kanal und den Wärmespeicher strömt.
Da der andere Ventilator in umgekehrter Richtung arbeitet, wird Außenluft angesaugt und diese strömt über den anderen Kanal nach innen. In dieser Arbeitsrichtung wird z.B. bei Winterbetrieb der eine Wärmespeicher durch die warme Innenluft aufgewärmt und der andere Wärmespeicher durch die Außenluft abgekühlt, so daß die einströmende Außenluft erwärmt wird.

Werden nach kurzer Zeit die Drehrichtungen der Ventilatoren gewechselt, so erwärmt der inzwischen aufgewärmte Speicher die Außenluft und der abgekühlte Speicher wird durch die Innenluft wieder aufgeheizt. Durch ständigen Wechsel gelingt es, dafür zu sorgen, daß die verbrauchte Innenluft nicht ohne Abgabe ihrer Energie an die angesaugte Frischluft ausströmt.

In den Kanälen können außenseitig Filter in Querrichtung befestigt sein.

In weiteren nicht gezeigten alternativen Ausführungen können statt zweier Kanäle mehrere mit mehreren Ventilatoren und Wärmespeichern angeordnet sein und ferner ist es nicht unbedingt erforderlich, daß diese Kanäle sich gerade erstrecken.

## Patentansprüche

1. Verfahren zum Rückgewinnen von Energie aus der Luftströmung zwischen der Innenraumluft und der Außenluft mit Ventilatoren, die die Luft durch Wärmespeicher in zueinander entgegengesetzte Strömungsrichtungen drücken, wobei in zwei voneinander getrennten Kanälen je ein Wärmespeicher und ein Ventilator in entgegengesetzte Richtungen arbeiten, und daß in regelmäßigen Zeitabständen die Drehrichtungen beider Ventilatoren gleichzeitig wechseln, **dadurch gekennzeichnet,** daß die Zeitspannen, in denen die Ventilatoren in einer Richtung fördern, ungleich sind von den Zeitspannen, in denen die Ventilatoren in die entgegengesetzte Richtung fördern.

2. Verfahren nach Anspruch 1, **dadurch gekennzeichnet,** daß die Zeitspannen der einen Richtung 50% bis 4-fach größer sind als die Zeitspannen der entgegengesetzten Richtung.

3. Verfahren nach Anspruch 1 oder 2, **dadurch gekennzeichnet,** daß die Länge der Zeitspannen entsprechend der Raumtemperatur geregelt werden.

4. Verfahren nach einem der vorherigen Ansprüche, **dadurch gekennzeichnet,** daß zur Regelung der Raumtemperatur die Länge der Zeitspanne, in denen die Ventilatoren in einer Richtung fördern, abnimmt und die Länge der Zeitspanne, in denen die Ventilatoren in der entgegengesetzten Richtung fördern, zunimmt.

5. Verfahren nach einem der vorherigen Ansprüche, **dadurch gekennzeichnet,** daß zwei aufeinander folgende Zeitspannen, in ihrer Gesamtlänge (Intervall 3) stets gleich groß sind wie zwei darauffolgende Zeitspannen.

## Claims

1. A method of recovering energy from the airflow between inside room air and the outside air by means of fans which force the air through heat accumulators in opposite directions of flow, while in each of two separated channels a heat accumulator and a fan operate in opposite directions, the directions of rotation of the two fans changing simultaneously at regular intervals, characterized in that the periods during which the fans deliver in one direction are not equal to the periods during which the fans deliver in the opposite direction.

2. A method according to claim 1, characterized in that the intervals of one direction are 50% to 4 times longer than the intervals of the opposite direction.

3. A method according to claims 1 or 2, characterized in that the length of the periods is controlled in dependence on room temperature.

4. A method according to one of the preceding claims, characterized in that to control room temperature, the length of the interval during which the fans deliver in one direction decreases, and the length of the period in which the fans deliver in the opposite direction increases.

5. A method according to one of the preceding claims, characterized in that two successive periods are always equal in their overall length (interval 3) to two following periods.

## Revendications

1. Procédé de récupération d'énergie à partir de l'écoulement d'air entre l'air intérieur d'une pièce et l'air extérieur, avec des ventilateurs qui compriment l'air dans des directions d'écoulement opposées entre elles à travers des accumulateurs thermiques, un accumulateur thermique et un ventilateur travaillant en directions opposées dans deux canaux séparés l'un de l'autre respectivement, et que les sens de rotation des deux ventilateurs changent respectivement à des intervalles de temps réguliers, caractérisé en ce que les intervalles de temps pendant lesquels les ventilateurs transportent dans une direction sont différents des intervalles de temps pendant lesquels les ventilateurs transportent dans la direction opposée.

2. Procédé selon la revendication 1,
caractérisé en ce que les intervalles de temps de l'une des directions sont 50% à 4 fois plus grands que les intervalles de temps de la direction opposée.

3. Procédé selon la revendication 1 ou 2,
caractérisé en ce que les longueurs des intervalles de temps sont régulées en correspondance à la température de la pièce.

4. Procédé selon l'une des revendications précédentes,
caractérisé en ce que, pour la régulation de la température de la pièce, la longueur de l'intervalle de temps pendant lequel les ventilateurs transportent dans une direction diminue et la longueur de l'intervalle de temps pendant lequel les ventilateurs transportent dans l'autre direction augmente.

5. Procédé selon l'une des revendications précédentes,
caractérisé en ce que deux intervalles de temps successifs ont une longueur totale (intervalle 3) toujours égale à celle de deux intervalles de temps suivants.
